# EUROPÄISCHE PATENTSCHRIFT

(11) **EP 2 892 701 B1**
(45) Veröffentlichungstag und Bekanntmachung des Hinweises auf die Patenterteilung: **15.08.2018**
(21) Anmeldenummer: 13756828.3
(22) Anmeldetag: 02.09.2013
(51) Int. Cl.: B29B 11/14, B29B 11/08, B29C 49/00, B29C 49/06, B29C 49/12, B29K 67/00, B29K 27/06, B29K 23/00, B29K 25/00, B29D 22/00, B65D 1/00, B65D 1/02

(54) **PREFORM ZUR HERSTELLUNG VON KUNSTSTOFFBEHÄLTERN IN EINEM STRECKBLASVERFAHREN**
PREFORM FOR PRODUCING PLASTIC CONTAINERS IN A STRETCH BLOW MOULDING PROCESS
PRÉFORME PERMETTANT DE FABRIQUER DES CONTENANTS EN MATIÈRE PLASTIQUE AU COURS D'UN PROCÉDÉ D'ÉTIRAGE-GONFLAGE

(30) Priorität: 10.09.2012 CH 16482012; 17.12.2012 CH 28382012
(43) Veröffentlichungstag der Anmeldung: 15.07.2015
(73) Patentinhaber: Alpla-Werke Alwin Lehner GmbH und Co. KG, 6971 Hard (AT)
(72) Erfinder: SIEGL, Robert, A-6850 Dornbirn (AT)
(74) Vertreter: Bohest AG Branch Ostschweiz
(86) Internationale Anmeldenummer: PCT/EP2013/002621
(87) Internationale Veröffentlichungsnummer: WO 2014/037094

(56) Entgegenhaltungen:
- WO-A1-2009/053921
- DE-A1-102007 033 621

## Beschreibung

Die Erfindung betrifft einen supportringlosen Preform zur Herstellung von Kunststoffbehältern in einem Streckblasverfahren gemäss dem Oberbegriff des Patentanspruchs 1.

Ein grosse Zahl der heutzutage eingesetzten Kunststoffflaschen und dergleichen Kunststoffbehälter wird in einem Streckblasprozess hergestellt. Bei diesem Verfahren wird ein sogenannter Preform von üblicherweise länglicher, röhrchenartiger Gestalt, der an seinem einen Längsende einen Boden und am anderen Längsende einen Halsabschnitt mit ausgeformten Gewindeabschnitten oder dergleichen aufweist, in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach dem Reck-/Blasvorgang wird der fertige Kunststoffbehälter aus der Blasform entformt.

Der Preform wird vor dem Streckblasprozess üblicherweise in einem separaten Spritzgiessverfahren hergestellt. Die Preforms können auch in einem Fliesspressverfahren oder auch durch Extrusionsblasen hergestellt werden. Im sogenannten Einstufen-Streckblasprozess wird der Preform ohne dazwischen geschaltete Abkühlung und Lagerung unmittelbar nach seiner Herstellung zu einem Kunststoffbehälter umgeformt. Meist jedoch werden die Kunststoffbehälter in einem zweistufigen Verfahren hergestellt, bei dem in einem separaten Verfahren zunächst die Preforms hergestellt, abgekühlt und für die spätere Verwendung zwischengelagert werden. Die Herstellung der Kunststoffbehälter erfolgt räumlich und zeitlich getrennt in einem separaten Streckblasprozess. Bei diesem späteren Streckblasprozess werden die Preforms wieder erwärmt, um daraus Kunststoffflaschen herzustellen. Beispielsweise wird dazu mit Hilfe von Infrarotstrahlung über die axiale und/oder radiale Erstreckung des Preforms ein gewünschtes Temperaturprofil eingestellt, welches für den Streckblasprozess erforderlich ist. Nach dem Einsetzen des Preforms in das Formwerkzeug wird dieser mittels eines mit Überdruck eingeblasenen Gases radial ausgeformt und dabei mit einer Reckstange in axiale Richtung verstreckt. Danach wird der fertige Kunststoffbehälter entformt.

Eine grosse Anzahl der bekannten Preforms weist einen Supportring auf, der den länglichen Preformkörper vom Halsabschnitt trennt. Der Supportring dient zum Transport des Preforms und des daraus hergestellten Kunststoffbehälters. In der Streckblasvorrichtung stützt sich der Preform über den Supportring am Formwerkzeug ab, so dass nur der Preformkörper in die Formkavität ragt. Der Halsabschnitt wird üblicherweise beim Streckblasprozess nicht mehr verändert. Zwischen dem Supportring und den am Halsabschnitt ausgebildeten Gewindeabschnitten ist ein sogenannter Schnappring ausgeformt, der am fertig streckgeblasenen Kunststoffbehälter als Widerlager für einen Garantieverschluss dient. Derartige Garantieverschlüsse sind beispielsweise von Getränkeflaschen hinlänglich bekannt. Beim Abschrauben des Garantieverschlusses wird ein ringförmiger Abschnitt des Garantieverschlusses, für den der Schnappring ein Widerlager bildet, wenigstens teilweise vom übrigen Verschluss abgetrennt. Dadurch wird dem Verbraucher auch bei wiederverschlossener Flasche angezeigt, dass die Flasche bereits einmal geöffnet worden ist.

Bei der Herstellung von Massenartikeln, wie beispielsweise Kunststoffflaschen aus Polyethylenterephthalat (PET), stellt der Materialeinsatz einen entscheidenden Faktor für die Wettbewerbsfähigkeit und die Ökobilanz dar. Durch die sehr hohen Stückzahlen, in denen Kunststoffflaschen hergestellt werden, können Reduktionen des Materialgewichts im Zehntelgrammbereich sehr schnell zu Materialeinsparungen im Tonnenbereich führen. Daher wurden in der Vergangenheit grosse Anstrengungen unternommen, das Materialgewicht der Preforms für Kunststoffflaschen, insbesondere PET-Flaschen, zu verringern. Mit den aus dem Stand der Technik bekannten Preforms glaubte man, das Optimum erreicht zu haben, mussten die aus den Preforms hergestellten Kunststofflaschen ja auch die geforderten mechanischen Festigkeiten und Temperaturstabilitäten erreichen. Nachteilig an den bisherigen Anstrengungen zur Reduktion des Materialgewichts ist, dass diese vielfach Modifikationen der Streckblasanlagen und der Abfüllanlagen erforderten. Dies ist sowohl aus Sicht der Betreiber von Streckblasanlagen als auch aus Sicht der Abfüller von aus den Preforms hergestellten Kunststoffbehältern ein äusserst unbefriedigender Zustand.

In der WO 2006/027092 A1 ist beispielsweise ein Preform für Weithalsbehälter beschrieben, der einen gegenüber dem Preformkörper im Durchmesser stark erweiterten Halsabschnitt aufweist. Bei diesem Preform wird auf einen Supportring verzichtet. Die Abstützung des Preforms gegenüber dem Formwerkzeug erfolgt über eine umlaufende Ringschulter am Übergang vom Preformkörper zum erweiterten Halsabschnitt. Für den Transport des Preforms und des daraus hergestellten Kunststoffbehälters sind speziell ausgebildete Greifer erforderlich, deren Greiffläche der Umfangskontur des aus dem Formwerkzeug ragenden Halsabschnitts angepasst ist. Zwar weist dieser Preform durch den Verzicht auf den Supportring eine Materialeinsparung auf. Diese speziell für die Herstellung von Weithalsbehältern ausgebildete Preform erfordert jedoch ganz speziell ausgebildete Greifer für den Transport des Preforms und des daraus hergestellten Kunststoffbehälters. Diese müssen in eine in der Regel beliebig ausgerichtete Gewindestruktur eingreifen, ohne dabei mit dem Gewinde zu kollidieren. Ausserdem darf der von den Greifern erfasste Preform hinsichtlich der Orientierung seiner Längsachse nicht verändert werden, um eine Schräglage des Preforms zu vermeiden. Mit Hinblick auf den Umstand, dass die Greifer an zwei einander gegenüberliegenden Bereichen des Halsbereichs angreifen und sich je nach axialer Lage der Berührungspunkte sehr leicht ein Kippmoment einstellen kann, ist unmittelbar einsichtig, dass für den bekannten Preform geeignete Greifer einen relativ komplexen Aufbau aufweisen müssen und daher insgesamt den apparativen Aufwand stark erhöhen. Weitere Preforms sind in der DE10 2007 033621 und in der WO2009/053921 beschrieben.

Preforms werden nach ihrer Herstellung üblicherweise in grossen Gebinden, wie z.B. Kartons, Säcken, Gitterboxen, Oktabins, etc., ungeordnet abgefüllt und transportiert. Für die Weiterverarbeitung im Streckblasverfahren werden die Preforms aus den Gebinden in einen einer Streckblasvorrichtung vorgelagerten Trichter gefüllt und vereinzelt. Durch den Trichter gelangen die Preforms meist auf ein Steigband, mittels dem sie in kleinen Mengen diskontinuierlich oder kontinuierlich zu einem Rollensortierer transportiert werden. Im Rollensortierer richten sich die Preforms entsprechend ihrem Schwerpunkt derart aus, dass sie in einem Schlitz hängend, mit dem Preformkörper nach unten weisend, einzeln der Streckblasvorrichtung entgegen rutschen. Die Preforms werden über den Supportring oder einen vergleichbaren radialen Vorsprung zwischen dem Halsabschnitt und dem Preformkörper im Rollensortierer gehalten. Liegt der Schwerpunkt des Preforms klar unterhalb des Supportrings bzw. des radialen Vorsprungs im Bereich des Preformkörpers, so richten sich die Preforms korrekt aus und verlassen den Rollensortierer mit dem Preformkörper nach unten weisend. Um daher eine korrekte Ausrichtung der Preforms zu erreichen, werden die aus dem Stand der Technik bekannten Preforms vielfach mit einem verhältnismässig langen Preformkörper ausgebildet. Die kann jedoch beim Streckblasen zu einem ungünstigen Längenstreckverhältnis führen, was sich negativ auf die Festigkeit des streckgeblasenen Kunststoffbehälters auswirken kann. Um dem streckgeblasenen Kunststoffbehälter die geforderte Festigkeit zu verleihen, besteht daher besteht andererseits der Wunsch nach Preforms, die einen kürzeren Preformkörlper aufweisen. Je näher jedoch der Schwerpunkt der Preforms zu dem Supportring bzw. dem radialen Vorsprung liegt, desto grösser ist die Gefahr, dass derartige Preforms eine fehlerhafte Lage einnehmen können. Dies kann insbesondere auch bei Preforms mit einem grossen Öffnungsdurchmesser und langen Aussengewinden sowie mit einem kleinen leichten Preformkörper zu grossen Problemen führen. Vielfach sind daher am Ausgang des Rollensortierers Einrichtungen vorgesehen, mit denen die korrekte Ausrichtung der Preforms überprüft werden kann. Falsch ausgerichtete Preforms werden ausgeschieden und erneut dem Rollensortierer zugeführt. Ist die Anzahl der fehlerhaft ausgerichteten Preforms jedoch zu gross, kollabieren die meisten Sortiersysteme.

Aufgabe der vorliegenden Erfindung ist es daher, den geschilderten, teils widersprüchlichen Problemen mit den Preforms des Stands der Technik abzuhelfen. Ein Preform für die Herstellung von beliebigen Kunststoffbehältern, beispielsweise Kunststoffflaschen, in einem Streckblasverfahren soll dahingehend verbessert werden, dass in Sortier- und Vereinzelungsvorrichtungen, beispielweise in Rollensortierern, die Anzahl fehlerhaft ausgerichteter Preforms reduziert werden kann. Zusätzlich soll auch der Materialeinsatz für den Preform noch weiter reduziert werden. Der Preform soll auch die Herstellung von Kunststoffbehältern mit genormten kleineren Ausgiessöffnungen erlauben. Dabei sollen Modifikationen an den Streckblasanlagen und an den Abfüllanlagen vermieden werden können. Auf speziell ausgebildete Greifer für die Preforms und die daraus hergestellten Kunststoffbehälter soll verzichtet werden können. Die geforderten mechanischen Festigkeiten und die thermische Stabilität der aus den Preforms gefertigten Kunststoffbehälter müssen gewährleistet bleiben. Der Preform soll mit den üblichen Produktionsverfahren, insbesondere Spritzgiessverfahren, Fliesspressverfahren oder Extrusionsblasen, massentechnisch herstellbar sein.

Die Lösung dieser Aufgaben besteht in einem supportringlosen Preform zur Herstellung von Kunststoffbehältern, insbesondere Kunststoffflaschen, in einem Streckblasverfahren, welcher die in Patentanspruch 1 aufgelisteten Merkmale aufweist. Weiterbildungen und/oder vorteilhafte Ausführungsvarianten der Erfindung sind Gegenstand der abhängigen Patentansprüche.

Durch die Erfindung wird ein supportringloser Preform zur Herstellung von Kunststoffbehältern, insbesondere Kunststoffflaschen, in einem Streckblasverfahren geschaffen, der einen im wesentlichen länglichen Preformkörper aufweist, dessen eines Längsende geschlossen ausgebildet ist. An sein gegenüberliegendes Längsende schliesst der Preformköper an einen mit einer Ausgiessöffnung versehenen Halsabschnitt an, an dessen Aussenwandung Befestigungsmittel zur formschlüssigen Festlegung eines mit korrespondierenden Eingriffsmitteln ausgestatteten Verschlussteils ausgebildet sind. Am Übergang vom Preformkörper zum Halsabschnitt ist ein wenigstens bereichsweise ringförmig umlaufender Flansch angeformt, der eine Aussenwandung des Preformkörpers radial überragt. In einem Bereich zwischen dem Flansch und den Befestigungsmitteln weist der Halsabschnitt des Preforms eine umlaufende Ringnut auf. Die Ringnut ist vom Flansch und in Richtung der Befestigungsmittel von einer äusseren Schulter begrenzt, die sich von einem Grund der Ringnut schräg zur Aussenwandung des Halsabschnitts erstreckt. Die schräge äussere Schulter bildet an einer Innenwandung des Halsabschnitts, eine zumindest bereichsweise ringförmig umlaufende innere Schulter, die sich, in Richtung des Preformkörpers gesehen, axial oberhalb der Ringnut erstreckt und im wesentlichen frei von Hinterschneidungen in eine Innenwandung des Preformkörpers übergeht.

Am Übergang vom Preformkörper zum Halsabschnitt ist ein wenigstens bereichsweise ringförmig umlaufender Flansch angeformt, der eine Aussenwandung des Preformkörpers radial überragt. In einem Bereich zwischen dem Flansch und den Befestigungsmitteln weist der Halsabschnitt des Preforms eine umlaufende Ringnut auf. Die Ringnut ist vom Flansch und in Richtung der Befestigungsmittel von einer äusseren Schulter begrenzt, die sich von einem Grund der Ringnut schräg zur Aussenwandung des Halsabschnitts erstreckt. Die schräge äussere Schulter bildet an einer Innenwandung des Halsabschnitts, eine zumindest bereichsweise ringförmig umlaufende innere Schulter, die sich, in Richtung des Preformkörpers gesehen, axial oberhalb der Ringnut erstreckt und im wesentlichen frei von Hinterschneidungen in eine Innenwandung des Preformkörpers übergeht.

Wie der aus dem Stand der Technik bekannte Preform für die Herstellung von Weithalsbehältern, insbesondere Weithalsflaschen, im Streckblasverfahren kann der vorgeschlagene Preform ebenfalls auf einen Supportring verzichten, der üblicherweise für den Transport des Preforms, für dessen Abstützung im Formwerkzeug, für den Transport der streckgeblasenen Kunststoffflasche oder zu deren Festlegung bzw. Abstützung während des Aufbringens des Verschlusses in der Abfüllanlage dient. Zum Unterschied von dem bekannten Preform benötigt der vorgeschlagene Preform nicht zwingend speziell ausgebildete Abstützfläche an der Aussenwandung des Preforms. Statt dessen kann ein am Übergang vom Preformkörper zum Halsabschnitt angeformter, wenigstens bereichsweise ringförmig umlaufender Flansch zur Abstützung des Preforms am Formwerkzeug der Streckblasvorrichtung genutzt werden. Weiterhin kann der Flansch zur formschlüssigen axialen Festlegung eines Verschlussteils dienen. Der Flansch kann hierbei als Widerlager für das abtrennbare Garantieband eines Schraubverschlusses bzw. bei Ölflaschen oder dergleichen zur Festlegung des unteren Teils des üblicherweise verwendeten Scharnierverschlusses dienen. Demzufolge kann der Flansch als Schnappring für Verschlussteile ausgebildet sein. Das Formwerkzeug muss dazu nicht umgestaltet werden, da der Überstand des Flansches über den Aussenumfang des Preformkörpers ausreichend gross ist. Üblicherweise beträgt der radiale Überstand des Flansches 0,5 mm bis zu 20 mm. Der Flansch kann ringförmig umlaufend ausgebildet sein. Er kann aber auch segmentartig ausgebildet sein. Seine Umfangskontur kann kreisförmig sein; sie kann aber auch von der Kreisform abweichen und beispielsweise als Polygon ausgebildet sein.

Durch das Entfallen des Supportrings kann Material eingespart werden. Ein derzeit üblicher 38mm Hals mit Supportring für Milch- oder Saftflaschen wiegt etwa zwischen 3,5g und 5,5g. Der vorgeschlagene Preform ist trotz gleicher Wandstärke zwischen etwa 1g und 2g leichter als der aus dem Stand der Technik bekannte Preform. Da zusätzlich der Preformkörper des vorgeschlagenen Preforms unter dem Flansch in der Spannweite kleiner ausgeführt werden kann als ein Preformkörper unter einem Supportring, kann hier zusätzlich etwa ein weiteres Gramm eingespart werden. Somit kann durch den vorgeschlagenen Preform eine Gewichtsreduktion von etwa 25% bis 50%, vorzugsweise 30%, gegenüber dem bekannten Preform bei gleicher Wandstärke erzielt werden.

Die Wirtschaftlichkeit der Herstellung von Preforms im Spritzgiessverfahren, im Extrusionsverfahren oder im Fliesspressverfahren ist eng mit dem Abstand zwischen den einzelnen Kavitäten verbunden. Der maximale Aussendurchmesser eines konventionellen Preforms ist durch den Supportring bestimmt. Durch den Verzicht auf den Supportring reduziert sich der maximale Aussendurchmesser, und es können in der Spritzform, der Extrusionsform oder der Pressform mehr Kavitäten untergebracht werden.

Die umlaufende Ringnut im Bereich zwischen dem Flansch und den am Halsabschnitt vorgesehenen Befestigungsmitteln erlaubt es, den Preform mit konventionellen Transporteinrichtungen, beispielsweise Zangen oder dergleichen, zu ergreifen und zu transportieren. Auf speziell ausgebildete Greifer kann somit verzichtet werden. Die Ringnut ist vom Flansch und in Richtung der Befestigungsmittel von einer schräg zur Aussenwandung des Halsabschnitts verlaufenden äusseren Schulter begrenzt. Die äussere Schulter bildet an einer Innenwandung des Halsabschnitts eine zumindest bereichsweise ringförmig umlaufende innere Schulter, die sich, in Richtung des Preformkörpers gesehen, axial oberhalb der Ringnut erstreckt und im wesentlichen frei von Hinterschneidungen in eine Innenwandung des Preformkörpers übergeht. Bei der Ringnut handelt es sich somit nicht um eine in die Aussenwandung des Halsabschnitts eingeformte Rille oder dergleichen, die abrupt und lokal begrenzt zu einer Verringerung der Wandstärke des Halsabschnitts führt. Vielmehr führt die Einschnürung des Halsabschnitts zu einer Verringerung des Aussendurchmessers des Halsabschnitts und des daran anschliessenden Preformkörpers, was zu einer nicht unerheblichen Reduktion des Materialeinsatzes führt.

Die spezielle Formgebung der schräg verlaufenden äusseren Schulter zusammen mit der oberhalb der Ringnut angeordneten inneren Schulter gewährleistet auch eine problemlose Herstellung des Preforms üblicherweise in einem Spritzgiessverfahren. Durch die spezielle Formgebung werden abrupte, lokal begrenzte Verengungen vermieden, die beim Spritzgiessen des Preforms zu Problemen führen könnten, indem sie verhindern, dass während des Füllvorgangs und während des Nachdrückens zum Schwundausgleich genügend Material in den Halsabschnitt mit den Gewindeabschnitten gelangt. Als Folge davon können Einfallstellen, Lunker oder nicht vollständig ausgespritzte Preformhälse auftreten. Die erfindungsgemässe Ausbildung des mit einer oberhalb der Ringnut angeordneten, sich schräg in Richtung der Preformöffnung erweiternden Schulterbereichs hingegen gewährleistet beim Spritzgiessen einen ausreichenden Materialfluss und begünstigt überdies auch einen gleichmässigen Aushärtvorgang, und es wird ein "Ausfrieren" von einzelnen Bereichen des Preforms mit allzu stark verringerter Wandstärke verhindert.

Der Preform ist auf konventionelle Weise, insbesondere im Spritzgiessverfahren, herstellbar. Durch den Verzicht auf den Supportring und durch die Einschnürung in Form der umlaufenden Ringnut im Halsabschnitt und die Verringerung des Aussendurchmessers wird nicht unerheblich Material eingespart. Die erfindungsgemässe Ausbildung des Preforms für das Streckblasverfahren ist zum Unterschied von den Preforms des Stands der Technik nicht auf die Herstellung von Weithalsbehältern beschränkt, sondern erlaubt vielmehr auch die Herstellung von Kunststoffbehältern, insbesondere Kunststoffflaschen, mit handelsüblichen Öffnungsdurchmessern von etwa 32 mm bis etwa 34 mm.

Durch den Verzicht auf den Supportring und die Abstützung des Preforms am Blasformwerkzeug über den radial abragenden Flansch reduziert sich auch die Länge des Halsabschnitts, der beim Streckblasverfahren aus dem Formwerkzeug ragt, und es kann weiteres Material eingespart werden.

Der erfindungsgemäss gestaltete Preform weist einen Schwerpunkt auf, der im Bereich des Preformkörpers angeordnet ist und von einem Übergang des Halsabschnitts zum Preformkörper einen Abstand aufweist, der grösser ist als 6 mm. Indem der Schwerpunkt des Preforms in Richtung des Preformkörpers verlagert ist, kann die Wahrscheinlichkeit einer Fehllage des Preforms am Ausgang einer Sortiereinrichtung, insbesondere eines Rollensortierers, deutlich verringert werden. Dies gilt insbesondere auch für Preforms mit grösseren Halsdurchmessern und kürzeren Preformkörpern. Bei Berücksichtigung der Vorgabe für die Anordnung des Schwerpunkts des Preforms, kann seine Wandstärke im Halsabschnitt und/oder im Preformkörper weiter verringert werden, solange die geforderten mechanischen und thermischen Festigkeiten des aus dem Preform streckgeblasenen Kunststoffbehälters gewährleistet bleiben. In vorteilhaften Ausführungsvarianten des Preforms ist der Abstand seines Schwerpunkts vom Übergang des Halsabschnitts zum Preformkörper grösser als 9 mm, besonders bevorzugt grösser als 12 mm.

In einem weiteren Ausgestaltungsbeispiel der Erfindung weist der supportringlos ausgebildete Preform einen im wesentlichen länglichen Preformkörper auf, dessen eines Längsende mit einem Boden verschlossen ist. An seinem gegenüberliegenden Längsende schliesst der Preformkörper an einen mit einer Ausgiessöffnung versehenen Halsabschnitt an, an dessen Aussenwandung Befestigungsmittel zur formschlüssigen Festlegung eines mit korrespondierenden Eingriffsmitteln ausgestatteten Verschlussteils ausgebildet sind.

Die Ringnut weist gegenüber der Aussenwandung des Halsabschnitts eine radiale Tiefe auf, die etwa 0,1 mm bis etwa 1,1 mm, vorzugsweise etwa 0,8 mm beträgt. Dadurch ist gewährleistet, dass der Preform auch bei den üblichen Fertigungstoleranzen, Deformationen und Vibrationen auf der Streckblasmaschine mit den konventionellen Transporteinrichtungen, beispielsweise Zangen oder dergleichen, ergriffen und transportiert werden kann.

Indem die Ringnut an der Aussenwandung des Halsabschnitts eine grösste axiale Weite von etwa 0,3 mm bis etwa 3 mm, vorzugsweise etwa 1,5 mm aufweist reichen die Positioniergenauigkeiten der konventionellen Transporteinrichtungen aus, um den Preform sicher ergreifen zu können. Bei diesen Weiten der Ringnut kann auch die axiale Länge des Halsabschnitts gering gehalten werden.

Der Halsabschnitt des Preforms weist eine an den Befestigungsmitteln gemessene Wandstärke auf, die etwa 0,4 mm bis etwa 2 mm beträgt. Die Befestigungsmittel können beispielsweise als ein durchgehendes Gewinde, als Gewindeabschnitte, als Führungsnuten oder -vorsprünge eines Bajonettverschlusses oder dergleichen ausgebildet sein. Es versteht sich, dass unter Gewinde bzw. Gewindeabschnitten sowohl positive, die Aussenwandung des Halsabschnitts überragende Strukturen, als auch negative, gegenüber der Aussenwandung des Halsabschnitts zurückspringende Strukturen zu versehen sind. Die Wandstärke des Halsabschnitts wird dabei immer angrenzend an die jeweilige Struktur der Befestigungsmittel gemessen. Bei einem Gewinde bzw. bei Gewindeabschnitten wird die Wandstärke somit zwischen den Gewindegängen bzw. Gewindeabschnitten gemessen, bei Führungsnuten oder -vorsprüngen angrenzend an die jeweilige Struktur.

Am Grund der Ringnut weist der Halsabschnitt eine Wandstärke auf, die sich um nicht mehr als ± 50 % von der Wandstärke des Halsabschnitts an den Befestigungsmitteln unterscheidet. Vorzugsweise entspricht die Wandstärke am Grund der Ringnut im wesentlichen derjenigen an den Befestigungsmitteln. Eine an der oberhalb der Ringnut verlaufenden inneren Schulter gemessene Wandstärke entspricht im wesentlichen der 0,5-fachen bis 1,5-fachen Wandstärke des Halsabschnitts an den Befestigungsmitteln. Vorzugsweise entspricht die Wandstärke des Halsteils an der oberhalb der Ringnut ausgebildeten inneren Schulter im wesentlichen der Wandstärke des Halsabschnitts an den Befestigungsmitteln. Ein an den radial abragenden Flansch anschliessender Abschnitt des Preformkörpers weist eine Wandstärke auf, die sich um nicht mehr als ± 50 % von der Wandstärke des Halsabschnitts an den Befestigungsmitteln unterscheidet. Zweckmässigerweise entspricht die Wandstärke des an den Flansch anschliessenden Abschnitts des Preformkörpers im wesentlichen der Wandstärke des Halsabschnitts an den Befestigungsmitteln. Durch diese Dimensionierungen des Preforms ist gewährleistet, dass beim Spritzgiessen des Preforms während des Füllvorgangs und während des Nachdrückens zum Schwundausgleich genügend Material in den Halsabschnitt mit den Gewindeabschnitten gelangt. Dadurch werden Einfallstellen, Lunker oder nicht vollständig ausgespritzte Preformhälse vermieden. Die Wandstärkenverhältnisse begünstigen einen gleichmässigen Aushärtvorgang, und es wird ein "Ausfrieren" von einzelnen Bereichen des Preforms mit allzu geringer Wandstärke verhindert. Eine vorteilhafte Ausführungsvariante des Preforms sieht vor, dass die Wandstärken des Halsabschnitts an den Befestigungsmitteln, der inneren Schulter und des an den Flansch anschliessenden Abschnitts des Preformkörpers einander im wesentlichen entsprechen. Ein derartiger Prefrom erweist sich insbesondere für die Herstellung im Spritzgiessverfahren als besonders vorteilhaft, da gerade die besonders "strukturierten" Abschnitte eine möglichst gleichmässige Wandstärke aufweisen. Dadurch werden im Preformhals, der beim Streckblasprozess nicht weiter umgeformt, d.h. radial und/oder axial verstreckt wird, Schwachstellen vermieden. Dies erlaubt es, den Preformhals insgesamt mit einer geringeren Wandstärke auszubilden und somit Material zu sparen.

Damit der von den Transportmitteln ergriffene Preform noch besser in seiner Lage zentriert wird, verjüngt sich die Ringnut von der Aussenwandung des Halsabschnitts stetig radial nach innen zum Grund der Ringnut. Der stetige, fliessende Übergang zur Wandung des Halsabschnitts erweist sich als vorteilhaft für den Herstellvorgang des Preforms im Spritzgiessverfahren, beispielsweise für die Gleichmässigkeit des Aushärtens desselben oder für seine Entformung, bei der der fliessende Übergangsbereich der äusseren Schulter an der Aussenwandung eine Entformungsschräge bildet.

Der Preform weist eine Innenwandung auf, die im wesentlichen frei von Hinterschneidungen ist. Dadurch kann der Spritzgiessprozess mit einem einfachen Kern durchgeführt werden, was sich unmittelbar vorteilhaft auf die Herstellkosten der Preforms auswirkt.

Die im Inneren des Preformhalses ausgebildete, sich oberhalb der Ringnut erstreckende innere Schulter kann unterschiedlich ausgebildet sein. Beispielsweise kann sie eine Radialfläche bilden oder auch gestuft ausgestaltet sein. Eine vorteilhafte Ausführungsvariante der Erfindung sieht vor, dass die innere Schulter als eine Konusfläche ausgebildet ist. Die Konusfläche erlaubt beim Streckblasverfahren eine Abdichtung zwischen der Blasdüse und dem Preform im Inneren des Preforms. Indem die Abdichtung im Inneren des Preforms erfolgen kann, können Deformationen des Halsabschnitts, insbesondere der die Ausgiessöffnung berandenden Stirnfläche vermieden werden. Auch können dadurch allfällige Beschädigungen von den an der Aussenseite des Halsabschnittes vorgesehenen Befestigungsmitteln verhindert werden. Die Blasdüse kann einen kleineren Durchmesser aufweisen, da sie den Halsabschnitt des Preforms nicht mehr aufnehmen muss. Die Dimensionierung der Blasdüse kann bei dem erfindungsgemäss ausgebildeten Preform auch bei der Herstellung von Kunststoffbehältern mit grösseren Durchmessern der Ausgiessöffnung klein gehalten werden. Dies hat Vorteile bezüglich der Ausbildung der Blasdüse, bezüglich der erforderlichen Anpresskräfte und auch bezüglich der für den Streckblasprozess erforderlichen Mediendrücke. Durch die Abdichtung im Inneren des Preforms kann daher die Wandstärke im Halsabschnitt weiter verringert werden. Dies führt zu einer nicht unerheblichen Materialeinsparung, welche sich vorteilhaft auf die Stückkosten der Kunststoffbehälter auswirkt. Die Abdichtung im Inneren des Preforms erlaubt bei Mehrfachwerkzeugen eine engere Anordnung der Formkavitäten, was sich ebenfalls vorteilhaft auf die Herstellkosten der aus den Preforms streckgeblasenen Kunststoffbehälter auswirkt.

Die Abdichtung zwischen der Blasdüse und dem vorgeschlagenen Preform erfolgt im Inneren des Preforms ausschließlich durch einen ringförmigen Kontakt der Mündung der Blasdüse mit der wenigstens ein Konusfläche aufweisenden inneren Schulter. Auf zusätzliche Dichteinrichtungen kann verzichtet werden. Um die Abdichtung im Inneren des Preforms zu erleichtern, schliesst die Konusfläche mit der sich im wesentlichen axial erstreckenden Innenwandung des Halsabschnitts einen Winkel ein, der etwa 100° bis etwa 150° beträgt. Eine Ausführungsvariante der Erfindung kann vorsehen, dass die innere Schulter als eine einzige ringförmig umlaufende Konusfläche ausgebildet ist.

Für die Herstellung des Preform in einem Spritzgiessverfahren kann es zweckmässig sein, wenn die innere Schulter sich wenigstens bereichsweise parallel zur äusseren Schulter erstreckt. Dies insbesondere auch dann, wenn die äussere Schulter eine gestufte Aussenkontur aufweist. Ein von der äusseren Schulter mit einer Achse des Preforms eingeschlossener Winkel beträgt dabei zweckmässigerweise ± 10° bis + 60°.

Als Materialien für den Preform kommen alle für das Spritzblas- und Streckblasverfahren geeigneten Materialien in Frage. Beispielsweise sind dies PET, PET-G, HDPE, PP, PS, PVC, Copolymere der angeführten Kunststoffe, Biokunststoffe, wie beispielsweise PEF, gefüllte Kunststoffe und Mischungen der genannten Kunststoffe. Der Kunststoff bzw. das Kunststoffgemisch können Additive, Katalysatoren, Trenn- und Gleitmittel sowie Farbstoffe enthalten. Vorzugsweise ist der Preform in einem Spritzgiessverfahren oder auch in einem Fliesspressverfahren aus PET hergestellt. Hierbei ist es unerheblich, ob alle Bestandteile der Kunststoffe oder der Kunststoffgemische oder lediglich ein Teil dieser Bestandteile aus nachwachsenden Rohstoffen gewonnen werden und der verbleibende Teil der Bestandteile beispielsweise petrochemisch gewonnen wird.

Durch die Verwendung eines erfindungsgemäss ausgebildeten supportringlosen Preforms können die Gesamtkosten für die Herstellung von Kunststoffbehältern mit beliebig grossen Öffnungsdurchmessern, insbesondere von Kunststoffflaschen, in einem Streckblasverfahren reduziert werden. Zum Unterschied von den aus dem Stand der Technik bekannten supportringlosen Preforms sind für den Transport keine speziell ausgebildeten Transportmittel erforderlich und bedarf es keiner Modifikationen der Formwerkzeuge. Die spezielle Formgebung des Preforms führt zu deutlichen Materialeinsparungen, was sowohl ökonomisch als auch ökologisch von Vorteil ist. Die durch die Materialeinsparung im Halsabschnitt erreichte Verlagerung des Schwerpunkts des Preforms in Richtung des Preformkörpers erweist sich bei der Vereinzelung und korrekten Ausrichtung der Preforms von Vorteil. Dadurch können auch leichtere Preforms oder Preforms mit kürzeren Preformkörpern korrekt ausgerichtet werden. Auf Sonderzuführungseinrichtungen zur Streckblasanlage kann verzichtet werden.

Die aus dem erfindungsgemäss ausgebildeten Preform im Streckblasverfahren hergestellten Kunststoffbehälter weisen trotz der Materialeinsparungen mechanische und thermische Eigenschaften auf, die denen von aus konventionellen Preforms gefertigten Kunststoffbehältern vergleichbar sind. Besonders geeignet ist der vorgeschlagene Preform für die Herstellung von Kunststoffbehältern in einem Zweistufen-Streckblasverfahren, bei dem zunächst in einem separaten Prozess, beispielsweise durch Spritzgiessen, der Preform hergestellt wird und danach zeitlich und/oder räumlich getrennt der Preform in einem Streckblasverfahren zu einem Kunststoffbehälter, insbesondere einer Kunststoffflasche, umgeformt wird. Dadurch können die Herstellung der Preforms, beispielsweise im Spritzgiessverfahren, und das eigentliche Streckblasverfahren jeweils unter optimierten Bedingungen durchgeführt werden, wobei die unterschiedlichen Zykluszeiten der beiden unterschiedlichen Verfahren einander nicht beeinflussen.

Ein aus einem erfindungsgemäss ausgebildeten Preform streckgeblasener Kunststoffbehälter besitzt einen eine Ausgiessöffnung aufweisenden Halsabschnitt und einen mit einem Behälterboden verschlossenen Behälterkörper. Die Materialverteilung am Kunststoffbehälter, insbesondere die Materialverteilung zwischen dem Halsabschnitt und dem Behälterkörper, ist derart eingestellt, dass der Kunststoffbehälter einen Schwerpunkt aufweist, der derart im Behälterkörper angeordnet ist, dass eine gedachte erste Gerade, die senkrecht auf einer in dem Behälterboden ausgebildeten Standfläche steht und auf der der Schwerpunkt liegt, mit einer zweiten Geraden, die durch einen im Bereich eines äusseren Randes des Behälterbodens vorbestimmten Kipppunkt und den Schwerpunkt bestimmt ist, miteinander einen Winkel einschliessen, der grösser ist als 12°. Vorzugsweise ist in einer weiteren Ausführungsvariante des Kunststoffbehälters der von der ersten Geraden und der zweiten Geraden eingeschlossene Winkel grösser als 16°. Besonders bevorzugt ist schliesslich eine Ausführungsvariante des Kunststoffbehälters, bei welcher der von der ersten Geraden und der zweiten Geraden eingeschlossene Winkel grösser ist als 20°.

Die Standfläche beschreibt den Teil des Behälterbodens, auf dem der Kunststoffbehälter beispielsweise auf einem Förderband oder einem Tisch abgestellt wird. Der Kipppunkt im äußeren Bereich des Behälterbodens wird dadurch bestimmt, dass der leere Behälter, wenn auf diesen Kipppunkt gestellt, die Flasche gerade umkippt und nicht auf die Standfläche zurückkehrt. Aufgrund einer gewählten Flaschenform kann der Kipppunkt von der gedachten Gerade mehr oder minder weit entfernt sein. Im Sinne dieser Erfindung ist hier der der gedachten Gerade am nächsten liegende Kipppunkt zu verstehen. Durch die gezielte Wahl des Schwerpunkts des Kunststoffbehälters ist die Gefahr, dass dieser beim Transport zu und in Abfüllanlagen nicht so leicht umkippt. Die Kunststoffbehälter werden dort oft auf Förderbändern transportiert, die nicht immer nur eben verlaufen, sondern wegen des Kreuzens der Förderbänder oft auch leichte Steigungen aufweisen. Auch Trägheitskräfte beim Starten und Stoppen der Förderbänder oder bei Richtungsänderungen des Transports beinhalten das Risiko, dass die Kunststoffbehälter kippen können. Schliesslich können auch Vibrationen, Berührungen der Kunststoffbehälter untereinander oder auch mit oberhalb der Transportbänder angeordneten Führungen und Leitschienen zu Kippmomenten führen, welche bei einer ungünstigen Anordnung des Schwerpunkts in einem Kippen einzelner Kunststoffbehälter resultieren können. Die Verlagerung des Schwerpunkts vom Halsteil weg, weiter in Richtung des Behälterbodens begünstigt die Stabilität des Kunststoffbehälters. Der Winkel einer ersten Geraden, die senkrecht auf den Behälterboden bzw. auf den diesen abstützenden Untergrund steht und durch den Schwerpunkt verläuft, und einer zweiten Geraden, die durch den Schwerpunkt und einen Kipppunkt im Bereich des Behälterbodens verläuft, wird durch die Schwerpunktsverschiebung vergrössert und dadurch die Kippfestigkeit des Kunststoffbehälters verbessert. Bei den meisten Kunststoffbehältern entspricht die erste Gerade einer Behältermittelachse. Der auf der zweiten Geraden liegende Kipppunkt entspricht üblicherweise einem Punkt auf einer äussersten Randlinie einer Standfläche des Behälters auf dem Untergrund, beispielsweise der Transportfläche eines Transportbandes. Es versteht sich, dass der Kunststoffbehälter entlang seiner Standfläche eine Vielzahl von Kipppunkten aufweist.

Die erfindungsgemässe Ausführung des Kunststoffbehälters mit einer gezielten Materialverteilung zur Verschiebung des Schwerpunkts des Behälters erweist sich insbesondere auch für die Stabilität und Kippfestigkeit von Kunststoffbehältern von Vorteil, deren Behälterkörper einen von der Kreisform abweichenden Querschnitt, beispielsweise einen ovalen Querschnitt, besitzen. Indem aus supportringlosen Preforms streckgeblasene Kunststoffbehälter im Halsbaschnitt weniger Material und daher ein geringeres Gewicht aufweisen, können die Kunststoffbehälter gesamthaft leichter ausgebildet werden oder einen Behälterkörper aufweisen, der gegenüber den herkömmlichen Kunststoffbehältern eine grössere Länge aufweist, ohne dadurch an Stabilität zu verlieren und die Kippfestigkeit zu beeinträchtigen.

Weitere Vorteile und Merkmale ergeben sich aus der nachfolgenden Beschreibung eines Ausführungsbeispiels der Erfindung unter Bezugnahme auf die schematischen Zeichnungen in nicht massstabsgetreuer Darstellung:
- Fig. 1: zeigt einen halbseitig axial geschnittenen vorgeschlagenen Preform;
- Fig. 2: zeigt eine vergrösserte Darstellung eines Halsabschnitts des vorgeschlagenen Preforms mit angedeutetem Preformkörper;
- Fig. 3: zeigt den Preform in einer zu Fig. 1 analogen Darstellung zur Erläuterung der Schwerpunktsverhältnisse;
- Fig. 4: zeigt einen in eine Formkavität eines Formwerkzeugs eingesetzten vorgeschlagenen Preform; und
- Fig. 5: zeigt einen aus dem vorgeschlagenen Preform streckgeblasenen Kunststoffbehälter zur Erläuterung der Schwerpunktsverhältnisse und der Kippstabilität.

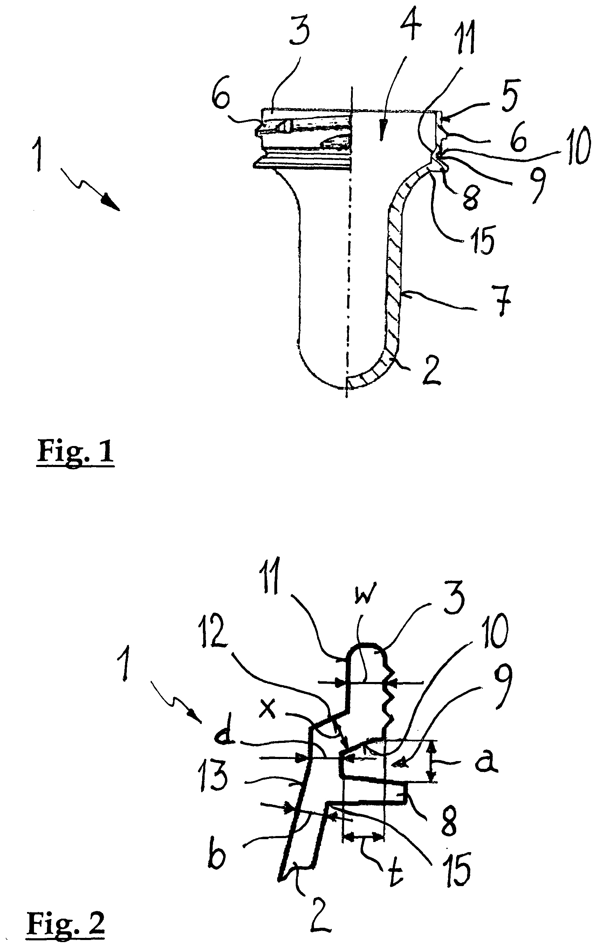

Fig. 1 zeigt einen halbseitig axial geschnitten Preform, der gesamthaft das Bezugszeichen 1 trägt. Der Preform 1 weist einen länglichen Preformkörper 2 auf, dessen eines Längsende verschlossen ausgebildet ist. An seinem entgegengesetzten Ende schliesst der Preformkörper 2 an einen Halsabschnitt 3 an, der mit einer Ausgiessöffnung 4 versehen ist. Der Halsabschnitt 3 ist an seiner Aussenwandung 5 mit Gewindeabschnitten 6 versehen, die zur formschlüssigen Festlegung eines hier nicht dargestellten Schraubverschlusses mit einem Innengewinde dienen. Weiter ist aus der Darstellung ersichtlich, dass der Preform 1 an einem Übergang 15 vom Preformkörper 2 zum Halsabschnitt 3 einen ringförmig umlaufenden Flansch 8 aufweist, der radial vom Mantel 7 des Preformkörpers 2 abragt. Der Flansch 8 dient als ein Widerlager für das abtrennbare Garantieband des Schraubverschlusses für einen aus dem Preform 1 streckgeblasenen Kunststoffbehälter bzw. bei Ölflaschen oder dergleichen zur Festlegung des unteren Teils eines üblicherweise verwendeten Scharnierverschlusses und wird vielfach auch als Schnappring bezeichnet. In einem Bereich zwischen dem Flansch 8 und den Gewindeabschnitten 6 weist der Halsabschnitt 2 eine umlaufende Ringnut 9 auf, die vom Flansch 8 und von einem Rücksprung 10 der Aussenwandung 7 des Halsteils 3 begrenzt ist. Die Ringnut 9 dient für den Eingriff von den üblichen Transportmitteln, beispielsweise von Greifern, für den Transport des Preforms 1.

Der Preform 1 kann ein- oder mehrschichtig ausgebildet sein. In Frage kommen alle für das Spritzgiess- und Streckblasverfahren geeigneten Materialien, beispielsweise PET, PET-G, HDPE, PP, PVC oder auch gefüllte Kunststoffe, die zumindest teilweise aus nachwachsenden Rohstoffen hergestellt sein können. Vorzugsweise ist der Preform 1 in einem Spritzgiessverfahren hergestellt.

Fig. 2 zeigt den Halsabschnitt 3 des Preforms 1 in vergrössertem Massstab. Aus Gründen der besseren Übersicht wurde auf eine Schraffur der geschnittenen Darstellung verzichtet. Die einerseits vom Flansch 8 und andererseits vom Rücksprung 10 der Aussenwandung 7 des Halsabschnitts 3 begrenzte Ringnut trägt wiederum das Bezugszeichen 9. Infolge der Ringnut 9 ist an einer Innenwandung 11 des Halsabschnitts 3 eine ringförmig umlaufende innere Schulter 12 ausgebildet, die frei von Hinterschneidungen in die Innenwandung 13 des Preformkörpers 2 übergeht. Die Ringnut 9 ist derart ausgebildet, dass die innere Schulter 12, in Richtung des Preformkörpers 2 gesehen, vor bzw. oberhalb der Ringnut 9 erstreckt. Hierbei erstreckt sich die innere Schulter 12 parallel zur Ringnut 9. Gemäss dem dargestellten Ausführungsbeispiel ist die innere Schulter 12 als eine ringförmig umlaufende Konusfläche ausgebildet, die mit der Innenwandung 11 des Halsabschnitts einen Winkel von etwa 100° bis 150° einschliesst. Die als Konusfläche ausgebildete innere Schulter 12 kann beim Streckblasverfahren als eine Abdichtfläche gegenüber der Mündung der Blasdüse genützt werden.

Die innere Schulter 12 erstreckt sich im wesentlichen parallel zur äusseren Schulter 10. Dabei kann die äussere Schulter 10 gestuft ausgebildet sein. Entsprechend kann auch die innere Schulter 12 gestuft ausgebildet sein, wobei sie wenigstens eine ringförmig umlaufende Konusfläche aufweist. Vorzugsweise ist die innere Schulter 12, unabhängig vom Verlauf der äusseren Schulter 10 als ein ringförmig umlaufende Konusfläche ausgebildet. Die äussere Schulter 10 schliesst mit einer Achse des Preforms einen Winkel ein, der ± 10° bis ± 60° beträgt.

Der Halsabschnitt 3 des Preforms 1 weist eine zwischen den Gewindeabschnitten 6 gemessene Wandstärke w auf, die etwa 0,4 mm bis etwa 2 mm beträgt. Eine am Grund der Ringnut gemessen Wandstärke des Halsabschnitts 3 ist in Fig. 2 mit dem Bezugszeichen d versehen. Die Wandstärke d am Grund der Ringnut 9 unterscheidet sich um nicht mehr als + 50 % von der Wandstärke w des Halsabschnitts 3 zwischen den Gewindeabschnitten 6. Vorzugsweise entspricht die Wandstärke d am Grund der Ringnut 9 im wesentlichen der Wandstärke w zwischen den Gewindeabschnitten 6 oder liegt geringfügig darüber. Eine an der sich oberhalb der Ringnut 9 erstreckenden inneren Schulter 12 gemessene Wandstärke x entspricht im wesentlichen der 0,5-fachen bis 1,5-fachen Wandstärke w des Halsabschnitts 3 an den Befestigungsmitteln. Vorzugsweise entspricht die Wandstärke x an der oberhalb der Ringnut 9 ausgebildeten inneren Schulter 12 im wesentlichen der Wandstärke w des Halsabschnitts 2 an den Befestigungsmitteln 6. Ein an den Flansch 8 anschliessender Abschnitt des Preformkörpers 2 weist eine mit dem Bezugszeichen b versehene Wandstärke auf, die sich ebenfalls um nicht mehr als ± 50 % von der Wandstärke w des Halsabschnitts 3 zwischen den Gewindeabschnitten 6 unterscheidet. Zweckmässigerweise entspricht die Wandstärke b des an den Schnappring 7 anschliessenden Abschnitts des Preformkörpers 2 im wesentlichen der Wandstärke w des Halsabschnitts 3 zwischen den Gewindeabschnitten 6.

Die umlaufende Ringnut 9 weist gegenüber der Aussenwandung 5 des Halsabschnitts 3 eine maximale radiale Tiefe t auf, die etwa 0,1 mm bis etwa 1,1 mm, vorzugsweise etwa 0,8 mm beträgt. Eine in axiale Richtung des Preforms 1 gemessene grösste axiale Weite a beträgt etwa 0,3 mm bis etwa 3 mm, vorzugsweise etwa 1,5 mm. Die umlaufende Ringnut 9 verjüngt sich in Richtung ihres Grunds und bildet zur Aussenwandung 5 des Halsabschnitts 3 einen vorzugsweise fliessenden Übergang.

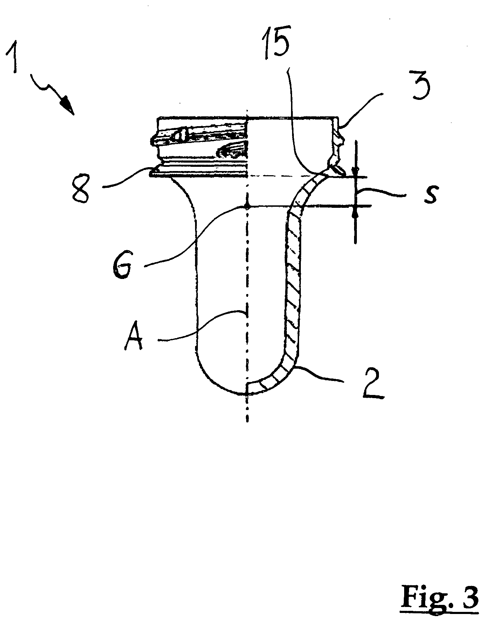

Der in Fig. 3 in einer zu Fig. 1 analogen Darstellung gezeigte Preform trägt wiederum gesamthaft das Bezugszeichen 1. Sein Preformkörper ist mit dem Bezugszeichen 2 versehen, der daran anschliessende Halsabschnitt trägt das Bezugszeichen 3. Der Übergang zwischen dem Preformkörper 2 und dem Halsabschnitt ist mit dem Bezugszeichen 15 versehen und befindet sich an der Einmündung des etwa radial abragenden Flansches 8 in den Preformkörper 2. Der Preform 1 weist einen Schwerpunkt G auf, der im Bereich des Preformkörpers 2 angeordnet ist und vom Übergang 15 des Halsabschnitts 3 zum Preformkörper 2 einen Abstand s aufweist, der grösser ist als 6 mm, vorzugsweise grösser ist als 9 mm, besonders bevorzugt grösser ist als 12 mm. Nachdem es sich bei dem Preform 1 meist um einen im wesentlichen rotationssymmetrischen Körper handelt liegt der Schwerpunkt G üblicherweise im Bereich einer strichpunktiert angedeuteten, mit dem Bezugszeichen A versehenen Längsachse oder Behältermittelachse des Preforms 1.

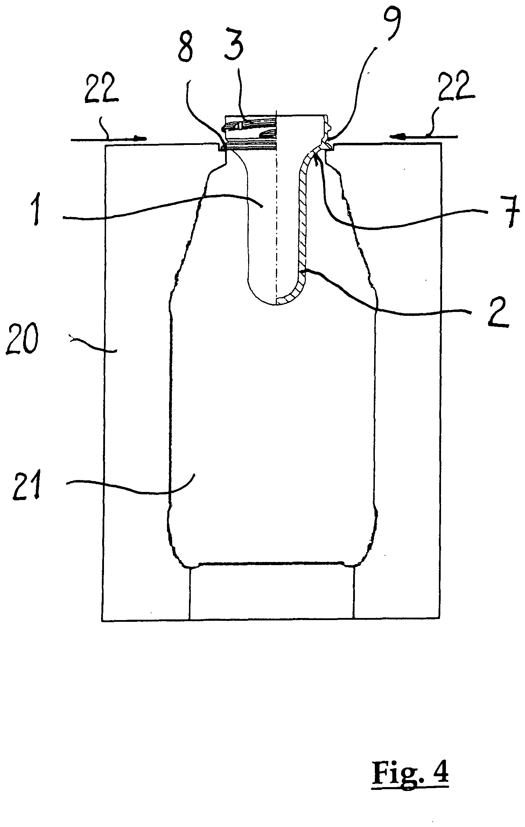

Fig. 4 zeigt schematisch einen in eine Formkavität 21 eines Formwerkzeugs 20 einer Streckblasvorrichtung eingesetzten vorgeschlagenen Preform 1. In Fig. 4 ist nur eine Formhälfte des Formwerkzeugs 20 dargestellt. Der eingesetzte Preform 1 ist in Analogie zu Fig. 1 halbseitig axial geschnitten dargestellt. Der radiale Überstand des am Preform 1 ausgebildeten Flansches 8 gegenüber dem Mantel 7 des Preformkörpers 2 beträgt etwa 0,5 mm bis zu etwa 20 mm. Die grosse Spannweite des radialen Überstands des Flansches 8 ergibt sich aus der Variabilität des Aussenumfangs des Preformkörpers 2. Je geringer der Aussenumfang des Preformkörpers 2, desto grösser ist bei einem vorgegebenen Halsdurchmesser der radiale Überstand des Flansches 8 gegenüber der Aussenwandung 7 des Preformkörpers 2. Je geringer der Aussendurchmesser des Preformkörpers 2, desto geringer ist selbst bei grösseren Wandstärken des Preformkörpers 2 der Materialeinsatz. Der radiale Überstand des Flansches 8 reicht aus, damit sich der Preform 1 beim Streckblasverfahren am Formwerkzeug 20 abstützen kann, damit sein Halsabschnitt 3 aus der Formkavität 21 ragt. Der erwärmte Preformkörper 2 befindet sich innerhalb der Formkavität 21 und wird durch ein mit Überdruck eingeblasenes Medium, üblicherweise Luft, axial und radial aufgeblasen. Zugleich wird der Preformkörper 1 durch einen eingefahrenen hier nicht dargestellten Reckdorn in axiale Richtung verstreckt. Nach dem Reck-/Blasvorgang wird der fertige Kunststoffbehälter entformt. Die am Halsabschnitt 3 ausgebildete umlaufende Ringnut 9 ermöglicht den Eingriff von konventionell ausgebildeten Transportvorrichtungen, beispielsweise von Greifern, für den Transport des Preforms 1 und des daraus hergestellten Kunststoffbehälters, welche in Fig. 4 durch die Pfeile 22 angedeutet sind.

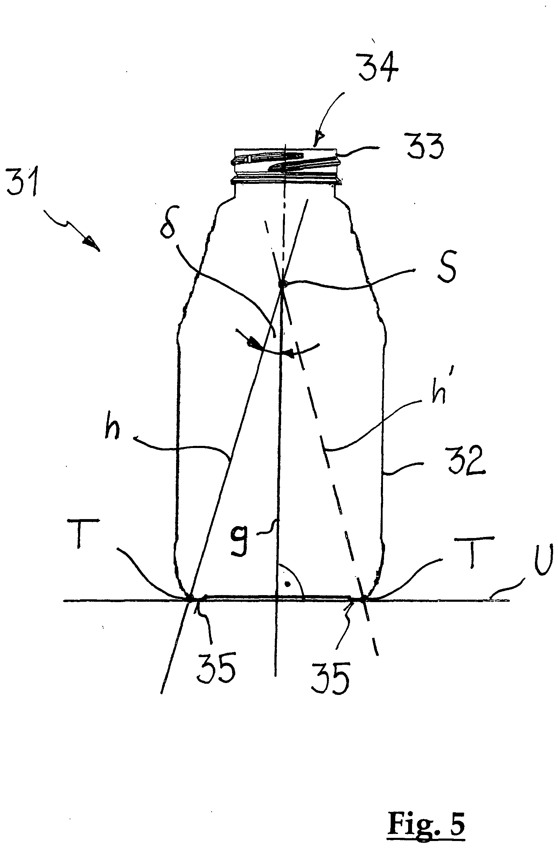

Fig. 5 zeigt einen aus einem erfindungsgemäss ausgebildeten Preform im Streckblasverfahren hergestellten Kunststoffbehälter, beispielsweise eine Kunststoffflasche, der gesamthaft mit dem Bezugszeichen 31 versehen ist. Der Kunststoffbehälter 31 besitzt einen Behälterkörper 32, der mit einem Behälterboden 30 verschlossen ist. An den Behälterkörper 32 schliesst ein mit einer Ausgiessöffnung 34 versehener Halsabschnitt 33 an, der weitgehend dem Halsabschnitt des Preforms entspricht, aus dem er gefertigt worden ist, welcher beim Streckblasverfahren ja meist nicht mehr verändert wird und vielfach während des Streckblasverfahrens aus der Formkavität ragt. Der Kunststoffbehälter 31 besitzt einen Schwerpunkt S, der aufgrund der Massenverhältnisse zwischen dem Halsabschnitt 33 und dem Behälterkörper 32 im Bereich des Behälterkörpers 32 angeordnet ist. Der Schwerpunkt S des Kunststoffbehälters 31 ist derart im Behälterkörper 32 angeordnet ist, dass eine gedachte erste Gerade g, die senkrecht auf einer von einer im Behälterboden 30 ausgebildeten Standfläche 35 steht und auf der der Schwerpunkt S liegt, mit einer gedachten zweiten Geraden h, die durch einen im Bereich eines äusseren Randes des Behälterbodens 30 vorbestimmten Kipppunkt T und den Schwerpunkt S bestimmt ist, miteinander einen Winkel δ einschliessen, der grösser ist als 12°. Vorzugsweise ist in einer weiteren Ausführungsvariante des Kunststoffbehälters 31 der von der ersten Geraden g und der zweiten Geraden h eingeschlossene Winkel δ grösser als 16°. Besonders bevorzugt ist schliesslich eine Ausführungsvariante des Kunststoffbehälters 31, bei welcher der von der ersten Geraden g und der zweiten Geraden h eingeschlossene Winkel δ grösser ist als 20°.

Bei den meisten Kunststoffbehältern fällt die erste Gerade g mit einer Längsachse oder einer Behältermittelachse des Behälters 31 zusammen. Der auf der zweiten Geraden h liegende Kipppunkt T entspricht üblicherweise einem Punkt auf einer äussersten Randlinie einer Standfläche 35 des Kunststoffbehälters 31 Behälters auf einem Untergrund U, beispielsweise einer Transportfläche eines Transportbandes. Dies ist in Fig. 5 durch eine weitere Gerade h' angedeutet, die als gestrichelte Linie ausgeführt ist. Es versteht sich, dass der Kunststoffbehälter 31 entlang seiner Standfläche 35 auf dem Untergrund U eine Vielzahl von Kipppunkten T aufweist. Der aus dem erfindungsgemäss ausgebildeten Preform hergestellte Kunststoffbehälter kann weitgehend rotationssymmetrisch ausgebildet sein.

Sein Behälterkörper kann aber auch einen von der Rotationssymmetrie abweichenden Querschnitt, beispielsweise einen ovalen Querschnitt aufweisen.

Ein erfindungsgemässer Preform zur Herstellung von Kunststoffbehältern, insbesondere Kunststoffflaschen, in einem Streckblasverfahren weist demnach einen im wesentlichen länglichen Preformkörper auf, dessen eines Längsende geschlossen ausgebildet ist. An seinem gegenüberliegenden Längsende schliesst der Preformköper an einen mit einer Ausgiessöffnung versehenen Halsabschnitt an, an dessen Aussenwandung Befestigungsmittel zur formschlüssigen Festlegung eines mit korrespondierenden Eingriffsmitteln ausgestatteten Verschlussteils ausgebildet sind. Der Preform weist einen Schwerpunkt auf, der im Bereich des Preformkörpers angeordnet ist und von einem Übergang des Halsabschnitts zum Preformkörper einen Abstand aufweist, der grösser ist als 6 mm, vorzugsweise grösser als 9 mm, besonders bevorzugt grösser als 12 mm. Diese Verhältnisse ergeben sich insbesondere bei einem supportringlosen Preform, der am Übergang vom Preformkörper zum Halsabschnitt einen wenigstens bereichsweise ringförmig umlaufenden Flansch aufweist, der eine Aussenwandung des Preformkörpers radial überragt. In einem Bereich zwischen dem Flansch und den Befestigungsmitteln weist der Halsabschnitt eine umlaufende Ringnut auf. Die Ringnut ist vom Flansch und in Richtung der Befestigungsmittel von einer äusseren Schulter begrenzt, die sich schräg von einem Grund der Ringnut zur Aussenwandung des Halsabschnitts erstreckt. Die schräg verlaufende äussere Schulter bildet an einer Innenwandung des Halsabschnitts eine zumindest bereichsweise ringförmig umlaufende innere Schulter, die sich, in Richtung des Preformkörpers gesehen, axial oberhalb der Ringnut erstreckt und im wesentlichen frei von Hinterschneidungen in eine Innenwandung des Preformkörpers übergeht.

## Patentansprüche

1. Supportringloser Preform zur Herstellung von Kunststoffbehältern, insbesondere Kunststoffflaschen, in einem Streckblasverfahren mit einem im wesentlichen länglichen Preformkörper (2), dessen eines Längsende geschlossen ausgebildet ist und der an seinem gegenüberliegenden Längsende an einen mit einer Ausgiessöffnung (4) versehenen Halsabschnitt (3) anschliesst, an dessen Aussenwandung (5) Befestigungsmittel (6) zur formschlüssigen Festlegung eines mit korrespondierenden Eingriffsmitteln ausgestatteten Verschlussteils ausgebildet sind, wobei am Übergang (15) vom Preformkörper (2) zum Halsabschnitt (3) ein wenigstens bereichsweise ringförmig umlaufender Flansch (8) angeformt ist, der eine Aussenwandung (7) des Preformkörpers (2) radial überragt, und wobei der Halsabschnitt (3) in einem Bereich zwischen dem Flansch (8) und den Befestigungsmitteln (6) eine umlaufende Ringnut (9) aufweist, die vom Flansch (8) und in Richtung der Befestigungsmittel (6) von einer äusseren Schulter (10) begrenzt ist, **dadurch gekennzeichnet, dass** die äussere Schulter (10) sich schräg von einem Grund der Ringnut (9) zur Aussenwandung (7) des Halsabschnitts (3) erstreckt, welche an einer Innenwandung (11) des Halsabschnitts (3) eine zumindest bereichsweise ringförmig umlaufende innere Schulter (12) bildet, die sich, in Richtung des Preformkörpers (2) gesehen, axial oberhalb der Ringnut (9) erstreckt und im wesentlichen frei von Hinterschneidungen in eine Innenwandung (13) des Preformkörpers (2) übergeht.

2. Preform gemäss Anspruch 1, **dadurch gekennzeichnet, dass** die Ringnut (9) eine radiale Tiefe (t) gegenüber der Aussenwandung (5) des Halsabschnitts (3) aufweist, die etwa 0,1 mm bis etwa 1,1 mm, vorzugsweise etwa 0,8 mm beträgt.

3. Preform nach Anspruch 1 oder 2, **dadurch gekennzeichnet, dass** die Ringnut (9) eine grösste axiale Weite (a) von etwa 0,3 mm bis etwa 3 mm, vorzugsweise etwa 1,5 mm aufweist.

4. Preform nach einem der vorangehenden Ansprüche, **dadurch gekennzeichnet, dass** der Halsabschnitt (3) am Grund der Ringnut (9) eine Wandstärke (d) aufweist, die einer Wandstärke (w) des Halsabschnitts (3) an den Befestigungsmitteln (6) ± 50% entspricht.

5. Preform nach Anspruch 4, **dadurch gekennzeichnet, dass** die Wandstärke (d) des Halsabschnitts (3) am Grund der Ringnut (9) im wesentlichen der Wandstärke (w) des Halsabschnitts (3) an den Befestigungsmitteln (6) entspricht.

6. Preform nach einem der vorangehenden Ansprüche, **dadurch gekennzeichnet, dass** eine an der oberhalb der Ringnut (9) verlaufenden inneren Schulter (12) gemessene Wandstärke (x) einer Wandstärke (w) des Halsabschnitts (3) an den Befestigungsmitteln (6) ± 50% entspricht.

7. Preform nach Anspruch 6, **dadurch gekennzeichnet, dass** die an der oberhalb der Ringnut (9) verlaufenden inneren Schulter (12) gemessene Wandstärke (x) im wesentlichen der Wandstärke (w) des Halsabschnitts (3) an den Befestigungsmitteln (6) entspricht.

8. Preform nach einem der vorangehenden Ansprüche, **dadurch gekennzeichnet, dass** ein an den Flansch (8) anschliessender Abschnitt des Preformkörpers (2) eine Wandstärke (b) aufweist, die im Wesentlichen einer 0,5-fachen bis 1,5-fachen Wandstärke (w) des Halsabschnitts (3) an den Befestigungsmitteln (6) entspricht.

9. Preform nach Anspruch 8, **dadurch gekennzeichnet, dass** die Wandstärke (b) des an den Flansch (8) anschliessenden Abschnitts des Preformkörpers (2) im wesentlichen der Wandstärke (w) des Halsabschnitts (3) an den Befestigungsmitteln (6) entspricht.

10. Preform nach einem der vorangehenden Ansprüche, **dadurch gekennzeichnet, dass** der Halsabschnitt (3) eine an den Befestigungsmitteln (6) gemessene Wandstärke (w) aufweist, die etwa 0,4 mm bis etwa 2 mm beträgt.

11. Preform nach einem der vorangehenden Ansprüche, **dadurch gekennzeichnet, dass** die Ringnut (9) sich von der Aussenwandung (5) des Halsabschnitts (3) radial zum Grund der Ringnut (9) verjüngt.

12. Preform nach einem der vorangehenden Ansprüche, **dadurch gekennzeichnet, dass** die sich oberhalb der Ringnut (9) erstreckende innere Schulter (12) gestuft ausgebildet ist und wenigstens eine ringförmig umlaufende Konusfläche umfasst.

13. Preform nach einem der Ansprüche 1 - 12, **dadurch gekennzeichnet, dass** die sich oberhalb der Ringnut (9) erstreckende innere Schulter (12) als eine einzige ringförmig umlaufende Konusfläche ausgebildet ist.

14. Preform nach einem der vorangehenden Ansprüche, **dadurch gekennzeichnet, dass** die innere Schulter (12) sich wenigstens bereichsweise parallel zur äusseren Schulter (10) erstreckt.

15. Preform nach einem der vorangehenden Ansprüche, **dadurch gekennzeichnet, dass** die äussere Schulter (10) eine gestufte Aussenkontur aufweist.

16. Preform nach einem der vorangehenden Ansprüche, **dadurch gekennzeichnet, dass** die äussere Schulter (10) mit einer Achse des Preforms einen Winkel einschliesst, der + 10° bis ± 60° beträgt.

17. Preform nach einem der vorangehenden Ansprüche, **dadurch gekennzeichnet, dass** er vorzugsweise in einem Spritzgiessverfahren ein- oder mehrschichtig aus einem Material der Gruppe bestehend aus PET, PET-G, HDPE, PP, PS, PVC, Copolymeren der angeführten Kunststoffe, Biokunststoffen, wie beispielsweise PEF, gefüllten Kunststoffen und Mischungen der genannten Kunststoffe hergestellt ist.

18. Verwendung eines Preforms (1) gemäss einem der vorangehenden Ansprüche in einem Zweistufen-Streckblasprozess, bei dem zunächst in einem separaten Prozess der Preform (1) hergestellt wird und danach zeitlich und/oder räumlich getrennt der Preform (1) in einem Streckblasverfahren zu einem Kunststoffbehälter, insbesondere einer Kunststoffflasche, umgeformt wird.

19. Kunststoffbehälter, insbesondere Kunststoffflasche, hergestellt in einem Streckblasverfahren, vorzugsweise in einem Zweistufen-Steckblasverfahren, aus einem Preform (1) gemäss einem der Ansprüche 1 - 17.

20. Kunststoffbehälter gemäss Anspruch 19, mit einem eine Ausgiessöffnung (34) aufweisenden Halsabschnitt (33) und einem mit einem Behälterboden (30) verschlossenen Behälterkörper (32), **dadurch gekennzeichnet, dass** der Kunststoffbehälter (31) einen Schwerpunkt (S) aufweist, der derart im Behälterkörper (32) angeordnet ist, dass eine gedachte erste Gerade (g), die senkrecht auf einer in dem Behälterboden (30) ausgebildeten Standfläche (35)steht und auf der der Schwerpunkt (S) liegt, mit einer zweiten Geraden (h), die durch einen im Bereich eines äusseren Randes des Behälterbodens (30) vorbestimmten Kipppunkt (T) und den Schwerpunkt (S) bestimmt ist, miteinander einen Winkel (δ) einschliessen, der grösser ist als 12°.

21. Kunststoffbehälter gemäss Anspruch 20, **dadurch gekennzeichnet, dass** der von der ersten Geraden (g) und der zweiten Geraden (h) eingeschlossene Winkel (δ) grösser ist als 16°.

22. Kunststoffbehälter gemäss Anspruch 20, **dadurch gekennzeichnet, dass** der von der ersten Geraden (g) und der zweiten Geraden (h) eingeschlossene Winkel (δ) grösser ist als 20°.

23. Kunststoffbehälter gemäss einem der Ansprüche 18 - 22, **dadurch gekennzeichnet, dass** der Behälterkörper einen von der Kreisform abweichenden Querschnitt aufweist.

24. Kunststoffbehälter gemäss Anspruch 23, **dadurch gekennzeichnet, dass** der Behälterkörper einen ovalen Querschnitt aufweist.

## Claims

1. Preform without a supporting ring for producing plastic containers, in particular plastic bottles, in a stretch-blow-moulding process, the preform comprising an essentially elongated preform body (2), one longitudinal end of which is of a closed form and which at its opposite longitudinal end adjoins a neck portion (3), which is provided with a pouring opening (4) and on the outer wall (5) of which fastening means (6) for the form-fitting fixing of a closure part equipped with corresponding engagement means are formed, wherein, at the transition (15) from the preform body (2) to the neck portion (3), a flange (8) is formed on, running around peripherally, at least in certain regions, in an annular manner and protruding radially beyond an outer wall (7) of the preform body (2), and wherein the neck portion (3) has in a region between the flange (8) and the fastening means (6) a peripheral annular groove (9), which is bounded by the flange (8) and, in the direction of the fastening means (6), by an outer shoulder (10), **characterized in that** the outer shoulder (10) extends obliquely from a base of the annular groove (9) to the outer wall (7) of the neck portion (3) and at an inner wall (11) of the neck portion (3) forms an inner shoulder (12), which runs around peripherally, at least in certain regions, in an annular manner and, as seen in the direction of the preform body (2), extends axially above the annular groove (9) and merges into an inner wall (13) of the preform body (2) in a manner essentially free of undercuts.

2. Preform according to Claim 1, **characterized in that** the annular groove (9) has a radial depth (t) with respect to the outer wall (5) of the neck portion (3) that is approximately 0.1 mm to approximately 1.1 mm, preferably approximately 0.8 mm.

3. Preform according to Claim 1 or 2, **characterized in that** the annular groove (9) has a greatest axial width (a) of approximately 0.3 mm to approximately 3 mm, preferably approximately 1.5 mm.

4. Preform according to one of the preceding claims, **characterized in that** the neck portion (3) has at the base of the annular groove (9) a wall thickness (d) which corresponds to a wall thickness (w) of the neck portion (3) at the fastening means (6) ±50%.

5. Preform according to Claim 4, **characterized in that** the wall thickness (d) of the neck portion (3) at the base of the annular groove (9) corresponds essentially to the wall thickness (w) of the neck portion (3) at the fastening means (6).

6. Preform according to one of the preceding claims, **characterized in that** a wall thickness (x), measured at the inner shoulder (12) running above the annular groove (9), corresponds to a wall thickness (w) of the neck portion (3) at the fastening means (6) ±50%.

7. Preform according to Claim 6, **characterized in that** the wall thickness (x), measured at the inner shoulder (12) running above the annular groove (9), corresponds essentially to the wall thickness (w) of the neck portion (3) at the fastening means (6).

8. Preform according to one of the preceding claims, **characterized in that** a portion of the preform body (2) adjoining the flange (8) has a wall thickness (b) which corresponds essentially to 0.5 times to 1.5 times the wall thickness (w) of the neck portion (3) at the fastening means (6).

9. Preform according to Claim 8, **characterized in that** the wall thickness (b) of the portion of the preform body (2) adjoining the flange (8) essentially corresponds to the wall thickness (w) of the neck portion (3) at the fastening means (6).

10. Preform according to one of the preceding claims, **characterized in that** the neck portion (3) has a wall thickness (w), measured at the fastening means (6), which is approximately 0.4 mm to approximately 2 mm.

11. Preform according to one of the preceding claims, **characterized in that** the annular groove (9) tapers radially from the outer wall (5) of the neck portion (3) to the base of the annular groove (9).

12. Preform according to one of the preceding claims, **characterized in that** the inner shoulder (12) extending above the annular groove (9) is formed in a stepped manner and comprises at least one cone surface running around peripherally in an annular manner.

13. Preform according to one of Claims 1-12, **characterized in that** the inner shoulder (12) extending above the annular groove (9) is formed as a single cone surface running around peripherally an annular manner.

14. Preform according to one of the preceding claims, **characterized in that** the inner shoulder (12) extends at least in certain regions parallel to the outer shoulder (10).

15. Preform according to one of the preceding claims, **characterized in that** the outer shoulder (10) has a stepped outer contour.

16. Preform according to one of the preceding claims, **characterized in that** the outer shoulder (10) forms an angle with an axis of the preform that is ±10° to ±60°.

17. Preform according to one of the preceding claims, **characterized in that** it is preferably produced in an injection-moulding process in one or more layers from a material of the group consisting of PET, PET-G, HDPE, PP, PS, PVC, copolymers of the plastics cited, bioplastics, such as for example PEF, filled plastics and mixtures of the plastics mentioned.

18. Use of a preform (1) according to one of the preceding claims in a two-stage stretch-blow-moulding process, in which the preform (1) is first produced in a separate process and then, at a time thereafter and/or at a different location, the preform (1) is formed into a plastic container, in particular a plastic bottle, in a stretch-blow-moulding process.

19. Plastic container, in particular plastic bottle, produced in a stretch-blow-moulding process, preferably in a two-stage stretch-blow-moulding process, from a preform (1) according to one of Claims 1-17.

20. Plastic container according to Claim 19, comprising a neck portion (33) having a pouring opening (34) and comprising a container body (32) closed by a container bottom (30), **characterized in that** the plastic container (31) has a centre of gravity (S) which is arranged in the container body (32) in such a way that an imaginary first straight line (g), which is perpendicular to a standing area (35) formed in the container bottom (30) and on which the centre of gravity (S) lies, forms an angle (δ) greater than 12° with a second straight line (h), which is determined by a tipping point (T) predetermined in the region of an outer rim of the container bottom (30) and the centre of gravity (S).

21. Plastic container according to Claim 20, **characterized in that** the angle (δ) formed by the first straight line (g) and the second straight line (h) is greater than 16°.

22. Plastic container according to Claim 20, **characterized in that** the angle (δ) formed by the first straight line (g) and the second straight line (h) is greater than 20°.

23. Plastic container according to one of Claims 18-22, **characterized in that** the container body has a cross section deviating from the form of a circle.

24. Plastic container according to Claim 23, **characterized in that** the container body has an oval cross section.

## Revendications

1. Préforme sans anneau support, permettant de fabriquer des récipients en matière plastique, en particulier des bouteilles en matière plastique, au cours d'un procédé d'étirage-soufflage, avec un corps de préforme (2) sensiblement allongé, dont une extrémité longitudinale est réalisée sous une forme fermée et qui se raccorde par son extrémité longitudinale opposée à une partie de col (3) qui est pourvue d'une ouverture de versement (4) et sur la paroi extérieure (5) de laquelle sont réalisés des moyens de fixation (6) destinés au maintien par complémentarité de formes d'un élément de fermeture équipé de moyens d'engagement correspondants, sachant qu'à l'emplacement de la transition (15) du corps de préforme (2) vers la partie de col (3), il est prévu une collerette (8) qui s'étend au moins par portions de façon périphérique annulaire et dépasse radialement par rapport à une paroi extérieure (7) du corps de préforme (2), et sachant que la partie de col (3) présente, dans une région située entre la collerette (8) et les moyens de fixation (6), une rainure annulaire (9) périphérique qui est délimitée par la collerette (8) et, en direction des moyens de fixation (6), par un épaulement extérieur (10),
**caractérisée en ce que** l'épaulement extérieur (10) s'étend en biais depuis un fond de la rainure annulaire (9) vers la paroi extérieure (7) de la partie de col (3), qui forme, sur une paroi intérieure (11) de la partie de col (3), un épaulement intérieur (12) qui s'étend au moins par portions de façon périphérique annulaire et s'étend, vu dans la direction du corps de préforme (2), axialement au-dessus de la rainure annulaire (9) et se raccorde sensiblement sans contre-dépouilles à une paroi intérieure (13) du corps de préforme (2).

2. Préforme selon la revendication 1, **caractérisée en ce que** la rainure annulaire (9) présente par rapport à la paroi extérieure (5) de la partie de col (3) une profondeur radiale (t) qui est d'environ 0,1 mm à environ 1,1 mm, de préférence d'environ 0,8 mm.

3. Préforme selon la revendication 1 ou 2, **caractérisée en ce que** la rainure annulaire (9) présente une largeur axiale maximale (a) d'environ 0,3 mm à environ 3 mm, de préférence d'environ 1,5 mm.

4. Préforme selon une des revendications précédentes, **caractérisée en ce que** dans le fond de la rainure annulaire (9), la partie de col (3) présente une épaisseur de paroi (d) qui correspond à une épaisseur de paroi (w) de la partie de col (3) à l'emplacement des moyens de fixation (6) ± 50 %.

5. Préforme selon la revendication 5, **caractérisée en ce que** l'épaisseur de paroi (d) de la partie de col (3) dans le fond de la rainure annulaire (9) correspond sensiblement à l'épaisseur de paroi (w) de la partie de col (3) à l'emplacement des moyens de fixation (6).

6. Préforme selon une des revendications précédentes, **caractérisée en ce qu'**une épaisseur de paroi (x) mesurée sur l'épaulement intérieur (12) s'étendant au-dessus de la rainure annulaire (9) correspond à une épaisseur de paroi (w) de la partie de col (3) à l'emplacement des moyens de fixation (6) ± 50 %.

7. Préforme selon la revendication 6, **caractérisée en ce que** l'épaisseur de paroi (x) mesurée sur l'épaulement intérieur (12) s'étendant au-dessus de la rainure annulaire (9) correspond sensiblement à l'épaisseur de paroi (w) de la partie de col (3) à l'emplacement des moyens de fixation (6).

8. Préforme selon une des revendications précédentes, **caractérisée en ce qu'**une partie du corps de préforme (2) qui est adjacente à la collerette (8) présente une épaisseur de paroi (b) qui correspond sensiblement à 0,5 à 1,5 fois l'épaisseur de paroi (w) de la partie de col (3) à l'emplacement des moyens de fixation (6).

9. Préforme selon la revendication 8, **caractérisée en ce que** l'épaisseur de paroi (b) de la partie du corps de préforme (2) qui est adjacente à la collerette (8) correspond sensiblement à l'épaisseur de paroi (w) de la partie de col (3) à l'emplacement des moyens de fixation (6).

10. Préforme selon une des revendications précédentes, **caractérisée en ce que** la partie de col (3) présente une épaisseur de paroi (w), mesurée à l'emplacement des moyens de fixation (6), qui est d'environ 0,4 mm à environ 2 mm.

11. Préforme selon une des revendications précédentes, **caractérisée en ce que** la rainure annulaire (9) se rétrécit radialement en direction du fond de la rainure annulaire (9), à partir de la paroi extérieure (5) de la partie de col (3).

12. Préforme selon une des revendications précédentes, **caractérisée en ce que** l'épaulement intérieur (12) qui s'étend au-dessus de la rainure annulaire (9) est réalisé sous une forme étagée et comporte au moins une surface conique périphérique annulaire.

13. Préforme selon une des revendications 1 à 12, **caractérisée en ce que** l'épaulement intérieur (12) qui s'étend au-dessus de la rainure annulaire (9) est réalisé sous la forme d'une surface conique unique périphérique annulaire.

14. Préforme selon une des revendications précédentes, **caractérisée en ce que** l'épaulement intérieur (12) s'étend au moins par portions parallèlement à l'épaulement extérieur (10).

15. Préforme selon une des revendications précédentes, **caractérisée en ce que** l'épaulement extérieur (10) présente un contour extérieur étagé.

16. Préforme selon une des revendications précédentes, **caractérisée en ce que** l'épaulement extérieur (10) forme avec un axe de la préforme un angle qui est compris entre ± 10° et ± 60°.

17. Préforme selon une des revendications précédentes, **caractérisée en ce qu'**elle est fabriquée de préférence par un procédé de moulage par injection, avec une ou plusieurs couches, à partir d'un matériau du groupe comprenant PET, PET-G, HDPE, PP, PS, PVC, des copolymères des matières plastiques citées, des bioplastiques tels que le PEF, des matières plastiques chargées et des mélanges des matières plastiques citées.

18. Utilisation d'une préforme (1) selon une des revendications précédentes, dans un processus d'étirage-soufflage à deux étapes lors duquel on fabrique d'abord la préforme (1) au cours d'un processus séparé, et ensuite on effectue le formage de la préforme (1), avec une séparation dans le temps et/ou dans l'espace, au cours d'un procédé d'étirage-soufflage, pour obtenir un récipient en matière plastique, en particulier une bouteille en matière plastique.

19. Récipient en matière plastique, en particulier bouteille en matière plastique, fabriqué au cours d'un procédé d'étirage-soufflage, de préférence un procédé d'étirage-soufflage à deux étapes, à partir d'une préforme (1) selon une des revendications 1 à 17.

20. Récipient en matière plastique selon la revendication 19, comprenant une partie de col (33), dotée d'une ouverture de versement (34), et un corps de récipient (32) fermé par un fond de récipient (30), **caractérisé en ce que** le récipient en matière plastique (31) présente un centre de gravité (S) qui est disposé dans le corps de récipient (32), de manière à ce qu'une première droite (g) imaginaire, qui est perpendiculaire à une surface de pose (35) réalisée dans le fond du récipient (30) et sur laquelle se situe le centre de gravité (S), forme avec une deuxième droite (h), qui est définie par un point de basculement (T), prédéterminé dans la région d'un bord extérieur du fond de récipient (30), et le centre de gravité (S), un angle (δ) qui est supérieur à 12°.

21. Récipient en matière plastique selon la revendication 20, **caractérisé en ce que** l'angle (δ) formé par la première droite (g) et la deuxième droite (h) est supérieur à 16°.

22. Récipient en matière plastique selon la revendication 20, **caractérisé en ce que** l'angle (δ) formé par la première droite (g) et la deuxième droite (h) est supérieur à 20°.

23. Récipient en matière plastique selon une des revendications 18 à 22, **caractérisé en ce que** le corps de récipient présente une section transversale différente de la forme circulaire.

24. Récipient en matière plastique selon la revendication 23, **caractérisé en ce que** le corps de récipient présente une section transversale ovale.
